# EUROPÄISCHE PATENTSCHRIFT

(11) **EP 1 446 564 B1**
(45) Veröffentlichungstag und Bekanntmachung des Hinweises auf die Patenterteilung: **05.11.2008**
(21) Anmeldenummer: 02791584.2
(22) Anmeldetag: 20.11.2002
(51) Int. Cl.: F02B 43/00, F02B 1/12, F02B 19/10, F02B 19/14

(54) **VERBRENNUNGSMOTOR**
INTERNAL COMBUSTION ENGINE
MOTEUR A COMBUSTION

(30) Priorität: 20.11.2001 AT 18222001
(43) Veröffentlichungstag der Anmeldung: 18.08.2004
(60) Teilanmeldung: 08013590.8
(73) Patentinhaber: GE Jenbacher GmbH & Co OHG, 6200 Jenbach (AT)
(72) Erfinder: PLOHBERGER, Diethard, A-6200 Jenbach (AT); CHVATAL, Dieter, A-6200 Jenbach (AT); SCHAUMBERGER, Herbert, A-4655 Vorchdorf (AT)
(74) Vertreter: Torggler, Paul Norbert
(86) Internationale Anmeldenummer: PCT/AT2002/000325
(87) Internationale Veröffentlichungsnummer: WO 2003/044349

(56) Entgegenhaltungen:
- FR-A- 2 810 692
- GB-A- 2 186 913
- US-A1- 2001 017 127
- PATENT ABSTRACTS OF JAPAN vol. 1996, no. 08, 30. August 1996 (1996-08-30) & JP 08 093477 A (TOKYO GAS CO LTD), 9. April 1996 (1996-04-09)
- PATENT ABSTRACTS OF JAPAN vol. 2000, no. 26, 1. Juli 2002 (2002-07-01) & JP 2001 248445 A (NISSAN MOTOR CO LTD), 14. September 2001 (2001-09-14)

## Beschreibung

Die Erfindung betrifft einen Verbrennungsmotor, insbesondere stationären Gas-Ottomotor, mit mindestens einem Zylinder in dem ein Kolben verschieblich gelagert ist, wobei der Kolben ein im Wesentlichen homogenes Kraftstoff-Luftgemisch in einem Hauptbrennraum im Zylinder komprimiert und der Hauptbrennraum über wenigstens eine Überströmöffnung mit mindestens einer Vorkammer in Verbindung steht.

HCCI (Homogeneous Charge Compression Ignition) Motoren sind bereits bekannt. Sie kommen im Normalbetrieb ohne fremdgesteuerte Zündung, also sowohl ohne Zündkerzen als auch ohne Kraftstoffeinspritzung zum Zündzeitpunkt, aus. Vielmehr wird während des Ansaug- und Kompressionstaktes ein im wesentliches homogenes Kraftstoff-Luft-Gemisch (beispielsweise Methangas-Luft-Gemisch) gebildet, welches sich durch die Kompression im Hauptbrennraum selbst entzündet. Es hat sich allerdings gezeigt, dass diese HCCI-Motoren insbesondere bei Verwendung eines gasförmigen Kraftstoffes, wie beispielsweise Erdgas bzw. Methan, ein sehr hohes Verdichtungsverhältnis benötigen, womit gegenüber herkömmlichen fremdgezündeten Brennkraftmaschinen eine vollkommen neue Konstruktion nötig ist.

Die US 6 230 683 B1 offenbart verschiedene Konzepte der HCCI- oder PCCI-Verbrennung. Dabei wird das Kraftstoff-Luftgemisch entweder durch Kompression im Hauptbrennraum selbst entzündet oder durch Zündkerzen, Glühkerzen oder Einspritzung von mindestens einem zusätzlichen Kraftstoff fremdgezündet. Die hier gezeigten Ausführungsvarianten haben den Nachteil, dass im Falle einer Selbstzündung durch Kompression im Hauptbrennraum sehr hoch verdichtet werden muss, wodurch der Verbrennungsmotor entsprechend massiv gebaut sein muss. Bei der Verwendung von Fremdzündung ist immer ein erhöhter Aufwand technisch zu realisieren.

Die JP 2001-248445 B beschreibt einen selbstzündenden Verbrennungsmotor, wobei in einer Vorkammer ein Drucksensor angeordnet ist und somit eine Regeleinrichtung realisiert wird, die in Abhängigkeit der Messwerte des Drucksensors die eingespritzte Brennstoffmenge sowie den Einspritzzeitpunkt regelt. Dadurch wird zwar allgemein die Verbrennung optimiert, die oben erwähnten Nachteile der nötigen massiven Bauweise des selbstzündenden Verbrennungsmotors werden aber nicht vermieden.

Eine Vorkammer mit einer speziellen geometrischen Gestalt zur Ermöglichung günstiger Strömungsverläufe des Brennstoff-Luft-Gemisches, um günstige Stickoxidemissionswerte zu erreichen, zeigt beispielsweise die japanische Schrift JP 08-093477 A.

Aufgabe der vorliegenden Erfindung ist es daher einen Verbrennungsmotor zu schaffen, bei dem die Verdichtungsverhältnisse im Hauptbrennraum unterhalb der Selbstzündgrenze gehalten werden können und trotzdem im hochgefahrenen Betriebszustand des Verbrennungsmotors auf Zündkerzen, Glühkerzen, Einspritzung oder dergleichen verzichtet werden kann.

Dies wird erfindungsgemäß erreicht indem das homogene Kraftstoff-Luftgemisch beim Komprimieren durch die Überströmöffnung in die Vorkammer strömt, dort in mindestens einem Betriebszustand des Verbrennungsmotors, vorzugsweise bei hochgefahrenem Verbrennungsmotor, von selbst zündet und anschließend das brennende Kraftstoff-Luftgemisch durch die Überströmöffnung in den Hauptbrennraum strömt, um das dort komprimierte Kraftstoff-Luftgemisch zu entzünden.

Erfindungsgemäß wird somit das Kraftstoff-Luftgemisch im Hauptbrennraum immer unterhalb der für eine Selbstzündung notwendigen Bedingungen gehalten. Die Zündung des im Brennraum vorhandenen Kraftstoff-Luftgemisches erfolgt immer über einen aus mindestens einer Vorkammer austretenden Flammenstrahl. Es reicht also im erfindungsgemäßen Normalbetrieb eine geschlossene hohlraumartige Vorkammer ohne Zündkerze und ohne Kraftstoffzufuhr aus, in der sich das Kraftstoff-Luftgemisch im hochgefahrenen Zustand der Brennkraftmaschine von selbst entzündet. Im Gegensatz zum Stand der Technik handelt es sich hierbei nicht um eine Selbstzündung im Hauptbrennraum, sondern um eine immer von der Vorkammer ausgehende Zündung. Die Vorkammer arbeitet daher im Normalbetrieb als selbstzündende Fremdzündquelle für den Hauptbrennraum. Dieses Konzept ist besonders günstig bei, vorzugsweise stationären, Gasmotoren anzuwenden. Von einem Normalbetrieb kann hierbei in der Regel ausgegangen werden, wenn eine Motorleistung von über 80%, vorzugsweise über 95% der maximalen Motorleistung erreicht ist. In diesem Zustand erfolgt die Entzündung des im Hauptbrennraum komprimierten Kraftstoff-Luftgemisches ausschließlich, dass heißt ohne weitere Hilfsmittel wie Zündkerzen, Glühkerzen oder zusätzliche Kraftstoffeinspritzung, durch das aus der Vorkammer überströmende brennende Kraftstoff-Luftgemisch. Ein Verbrennungsmotor bei dem das erfindungsgemäße Zündverfahren realisiert ist, kann daher konstruktiv im Wesentlichen einem fremdgezündeten Verbrennungsmotor gleichen. Dies gilt insbesondere auch für das Verdichtungsverhältnis.

Besonders günstig ist der Einsatz des erfindungsgemäßen Zündverfahrens bei Magermotoren mit einem Luftverhältnis λ größer 1,4, vorzugsweise größer 1,6. Um eine möglichst effektive Zündung des Kraftstoff-Luftgemisches im Hauptbrennraum zu erreichen, ist es günstig die Überströmöffnung zwischen Vorkammer und Hauptbrennraum düsenartig auszugestalten. Dies wird bevorzugt realisiert, indem die Querschnittsflächen der Vorkammer, des Überströmbereiches und des Hauptbrennraumes in einem gewissen Verhältnis zueinander stehen. So ist einerseits vorgesehen, dass bei einer längserstreckten Vorkammer der größte Kammerquerschnitt senkrecht zur Längserstreckung der Vorkammer und bei einer nicht längserstreckten Vorkammer der größte Kammerquerschnitt eine Querschnittsfläche aufweist, welche zwischen 0,5% und 10%, vorzugsweise zwischen 2% und 5%, der Querschnittsfläche des Zylinders senkrecht zur Zylinderlängserstreckung beträgt. Andererseits ist es hierfür günstig, dass der kleinste Querschnitt der Überströmöffnung eine Fläche zwischen 3% und 20%, vorzugsweise zwischen 5% und 8%, der Querschnittsfläche der Vorkammer aufweist, wobei diese bei einer längserstreckten Vorkammer der größte Kammerquerschnitt senkrecht zur Längserstreckung der Vorkammer und bei einer nicht längserstreckten Vorkammer der größte Kammerquerschnitt ist.

Eine weitere Verbesserung der Entzündung des Kraftstoff-Luftgemisches im Hauptbrennraum wird erreicht, indem jedem Hauptbrennraum zwei oder mehrere Vorkammern zugeordnet sind, die jeweils über wenigstens eine Überströmöffnung mit dem Hauptbrennraum in Verbindung stehen.

Zum Hochfahren des Verbrennungsmotors in seinem Normalbetrieb ist es gemäß eines weiteren Aspektes der vorliegenden Erfindung vorgesehen, dass in mindestens einer Vorkammer eine abschaltbare Zündkerze angeordnet ist. Durch diese abschaltbare Zündkerze in der Vorkammer wird sichergestellt, dass das Brennstoff-Luftgemisch in allen Betriebszuständen, also auch beim Hochfahren der Brennkraftmaschine zunächst in der Vorkammer gezündet wird. Ist diese Zündung erst einmal erfolgt, so tritt das in der Vorkammer entzündete Brennstoffluftgemisch wie auch beim Normalbetrieb als Flammenstrahl in den Hauptbrennraum des Zylinders ein und entzündet dort das komprimierte Brennstoff-Luftgemisch, so dass eine rasche und vollständige Verbrennung im Hauptbrennraum vonstatten geht. Neben dem Hochfahren kann die abschaltbare Zündkerze auch in Betriebszuständen des Verbrennungsmotors eingesetzt werden, in dem sich dieser im unteren Leistungsbereich befindet.

In der Praxis reicht es bei Verbrennungsmotoren mit mehreren Vorkammern aus, wenn nur eine oder eine beschränkte Anzahl dieser Vorkammern eine Zündkerze aufweist, um den Motor leistungsmäßig hochzufahren. Ab einem bestimmten Prozentsatz der maximalen Motorleistung kann diese Zündkerze dann abgeschaltet werden. Hierbei ist es günstig, wenn eine Einrichtung zum Erfassen von mindestens einem Motorparameter (N, P_{z}, T) sowie eine Zündeinrichtung vorgesehen ist, wobei die Zündeinrichtung die Zündkerze(n) in Abhängigkeit von dem oder den erfassten Motorparameter(n) vorzugsweise zylinderselektiv an- bzw. abschaltet. Als Motorparameter kommen hierbei zum Beispiel die Motorleistungen (N) die vorzugsweise zylinderselektiv gemessene Abgastemperatur (T) und oder der vorzugsweise zylinderselektiv gemessene Druck (Pz) im Hauptbrennraum in Frage. Ist der vorgegebene Wert des oder der Motorparameter erreicht, so wird die Zündkerze abgeschaltet. Der Verbrennungsmotor läuft dann gemäß dem erfindungsgemäßen Verbrennungsverfahren.

Die Vorkammer kann günstigerweise auf der dem Kolben abgewandten Seite des Hauptbrennraumes am Zylinder angeordnet sein. Bezüglich der Form der Vorkammer sind verschiedene Varianten denkbar. Eine Günstige ist hierbei, dass jede Vorkammer einen länglichen Innenhohlraum aufweist, der vorzugsweise achsparallel zur Zylinderachse ausgerichtet ist. Darüber hinaus kann vorgesehen sein, dass der Verbrennungsmotor pro Zylinder mindestens ein Einlass- und mindestens ein Auslassventil (E, A) aufweist und die Vorkammern im Bereich zwischen diesen Ventilen im Zylinderkopf angeordnet sind.

Weitere Vorteile und Einzelheiten der Erfindung werden anhand der nachfolgenden Figurenbeschreibung näher erläutert.
Die Fig. 1 zeigt ein Ausführungsbeispiel eines erfindungsgemäßen Verbrennungsmotors in einer schematischen Darstellung,
die Fig. 1a zeigt einen Zylinder eines erfindungsgemäßen Verbrennungsmotors in einem schematischen Längsschnitt,
die Fig. 2 bis 4 zeigen schematisch gewünschte und tatsächliche Strömungsverhältnisse bei Vorkammern ohne eine Einrichtung zur Beeinflussung der Strömung
die Fig. 5 bis 8 zeigen Ausführungsbeispiele von Vorkammern für einen erfindungsgemäßen Verbrennungsmotor,
die Fig. 9 zeigt einen Schnitt gemäß der Linie A-A der Fig. 8,
die Fig. 10 zeigt ein Ausführungsbeispiel eines Zylinders eines erfindungsgemäßen Verbrennungsmotors in einem schematischen Längsschnitt, wobei vier Vorkammern für ein und denselben Hauptbrennraum vorgesehen sind,
die Fig. 11 zeigt eine entsprechende Draufsicht,
die Fig. 12 zeigt ebenfalls eine Draufsicht mit schematisch angedeuteten Keulen, die das aus den Vorkammern in den Hauptbrennraum einströmende Gasgemisch richtungsmäßig anzeigen.

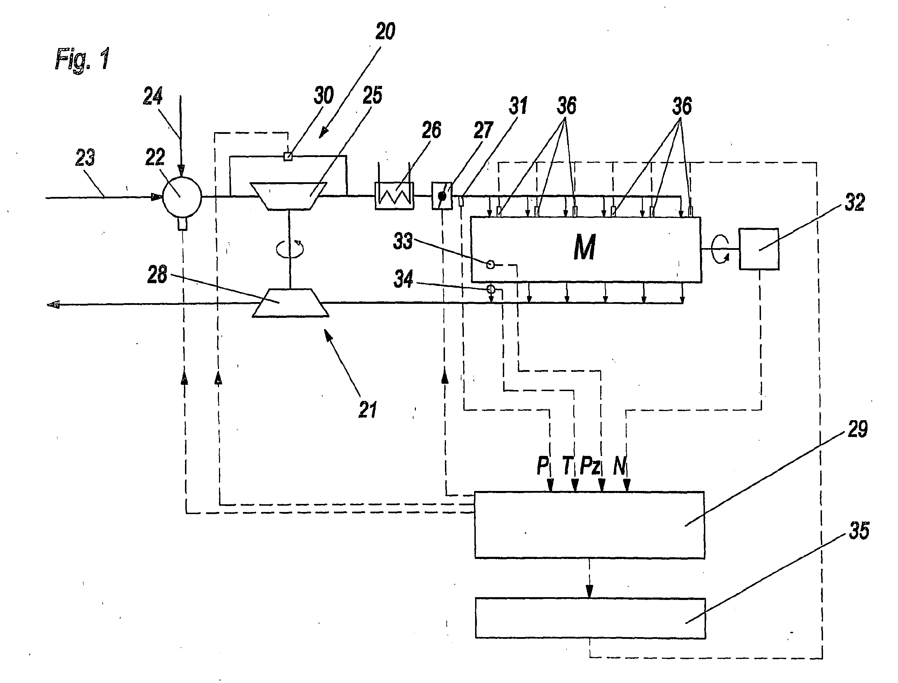

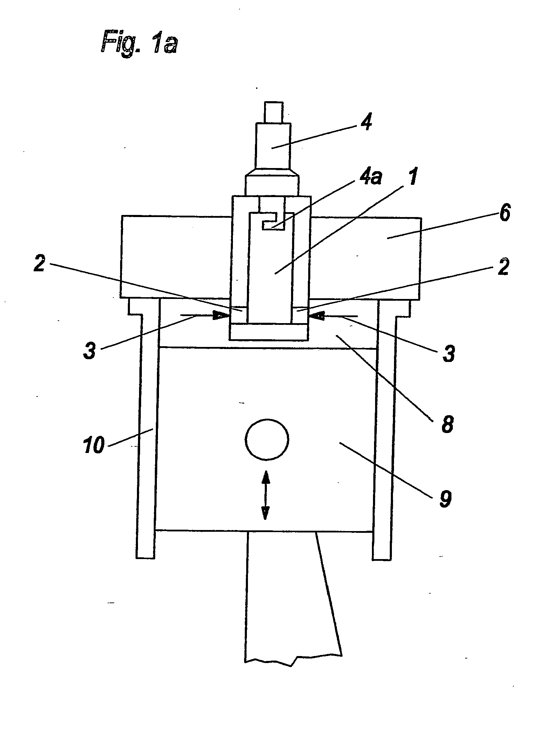

Bei dem in Fig. 1 dargestellten Ausführungsbeispiel handelt es sich um einen stationären mehrzylindrigen (6-zylindrigen) Gas-Otto-Motor in Form eines Hubkolbenmotors, wobei der eigentliche Motor mit M bezeichnet ist. Im Ansaugtrakt 20 des Motors ist ein Gasmischer 22 angeordnet, der über die Leitung 23 zugeführtes Treibgas (im wesentlichen Methan) und über die Leitung 24 zugeführte Luft mischt. Dieses homogene Gas-Luft-Gemisch wird dann über einen Verdichter, vorzugsweise einen Turbolader 25, verdichtet und gelangt über einen Gemischkühler 26 und eine Drosselklappe 27 zum Motor M. Im Abgastrakt 21 des Motors M ist das abgasseitige Turbinenrad 28 des Turboladers angeordnet.

Der Motor M wird von einer elektronischen Steuereinrichtung 29 gesteuert, die insbesondere die Stellung des Gasmischers 22, die Stellung eines Bypass-Ventiles 30 um den Turbolader 25 und die Drosselklappe 27 ansteuert. Mögliche Eingangsgrößen für diese elektronische Steuereinrichtung sind der Druck des Kraftstoff-Luft-Gemisches vor den Einlassventilen (Drucksensor 31), die Motorleistung N (Leistungserfassungseinrichtung 32), der Druck P_{z} in den einzelnen Brennräumen (Meßeinrichtung 33), die Abgastemperatur T 34 und gegebenenfalls noch weitere Motorparameter. Der Brennraumdruck P_{z}, die Abgastemperatur T können zylinderselektiv gemessen werden. In Fig. 1 ist die Messung jeweils nur für einen Zylinder angezeigt, um die Übersichtlichkeit nicht zu stören. Der Verbrennungsmotor der Fig. 1 weist eine Zündeinrichtung 35 auf, die die Zündkerzen 36 ansteuert. Wie im folgenden noch weiter erläutert werden wird, sind diese Zündkerze(n) nur für das Hochfahren des Motors nötig. Im stationären Normalbetrieb, insbesondere bei Vollast oder knapp darunter, können diese Zündkerzen abgeschaltet werden.

Die Fig. 1a zeigt einen von vorzugsweise mehreren Zylindern eines erfindungsgemäßen Verbrennungsmotors. Im Zylinder 10 ist der Kolben 9 verschieblich gelagert. Der (Haupt-) Hauptbrennraum oberhalb des Kolbenbodens ist mit 8 bezeichnet. Im Zylinderkopf 6 ist eine Vorkammer 1 angeordnet, die an ihrer dem Kolben abgewandten Seite eine Zündkerze mit Elektroden 4a aufweist. Zum Hauptbrennraum 8 hin ist die Vorkammer 1 über Überströmöffnungen 2 hin offen. Durch diese Überströmöffnungen 2 kann ein homogenes Kraftstoff-Luft-Gemisch während des Kompressionstaktes in die Vorkammer 1 eintreten und sich dort im hochgefahrenen Zustand des Motors von selbst und beim Hochfahren durch die Zündkerze 4 entzünden. Das entzündete Kraftstoff-Luft-Gemisch tritt dann durch die Überströmöffnungen als Flammenstrahl wieder in den Hauptbrennraum aus und zündet dort das vorhandene Kraftstoff-Luft-Gemisch, wobei der Arbeitstakt eingeleitet wird. Wie bereits erwähnt, ist die Zündkerze 4, also die Fremdzündung in der Vorkammer 1 nur in bestimmten Betriebszuständen des Motors nötig. Im Normalbetrieb wird die Zündkerze abgeschaltet, und zwar beispielsweise in Abhängigkeit von der Motorleistung N über die Steuereinrichtung 29 bzw. die Zündeinrichtung 35 (Fig. 1). Das Kraftstoff-Luftgemisch entzündet sich dann erfindungsgemäß in der Vorkammer 1 von selbst. Damit wird die Lebensdauer der Zündkerze um ein Vielfaches erhöht, sodass die bei stationären Gasmotoren üblichen Probleme mit beschränkten Standzeiten von Zündkerzen vollkommen entfallen.

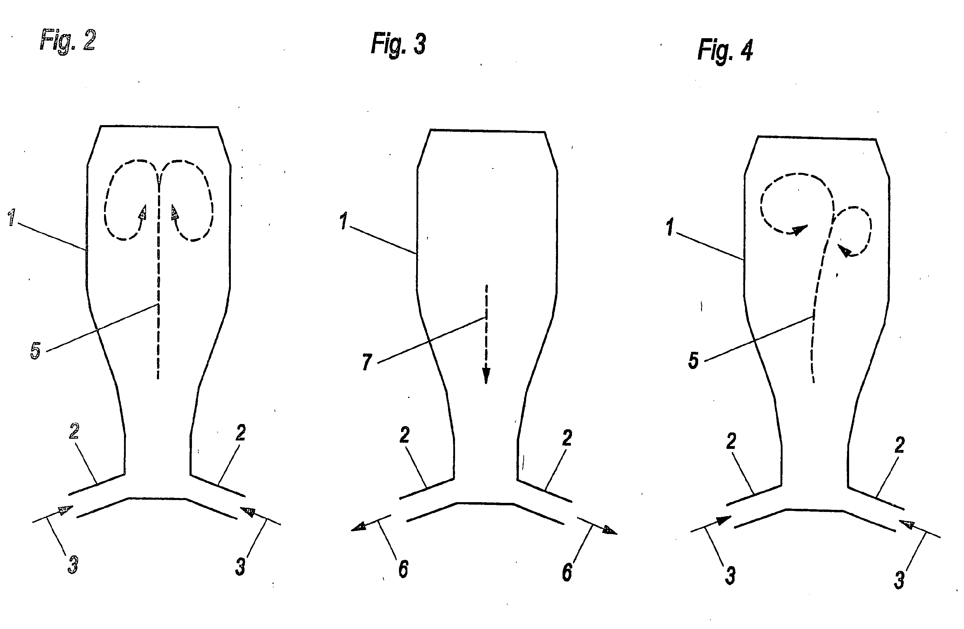

Fig. 2 zeigt die gewünschten Strömungsverhältnisse 5 beim Einströmen des Kraftstoff-Luft-Gemisches in die Vorkammer während der Verdichtungsphase im Hauptbrennraum 8. Das Einströmen 5 in die Vorkammer 1 erfolgt über die Überströmöffnungen 2. Nach dem Zünden strömt das verbrennende Kraftstoff-Luft-Gemisch explosionsartig über die Überströmöffnungen 2 in Richtung 6 in den Hauptbrennraum 8 (hier nicht dargestellt). Dieses Ausströmen ist in idealisierter Weise in Fig. 3 durch den Pfeil 7 dargestellt. Fig. 4 zeigt im Gegensatz zu dem in Fig. 2 dargestellten, gewünschten Einströmen 5 des Kraftstoff-Luft-Gemisches in die Vorkammer 1, das bei reellen Untersuchungen festgestellte tatsächliche, abgelenkte Einströmen 5 des Kraftstoff-Luft-Gemisches in die Vorkammer 1. Durch Ungenauigkeiten in der Geometrie der Vorkammer bzw. durch unsymmetrische Anströmung der Austrittslöcher bzw. Überströmöffnungen beim Einströmen des Kraftstoff-Luft-Gemisches in die Vorkammer wird die Strömung in der Vorkammer unsymmetrisch bezüglich der Vorkammerachse. Dies kann dazu führen, dass die Selbstzündung nicht mehr optimal erfolgt. Dieses in Fig. 4 übertrieben gezeigte Einströmverhalten 5 birgt des weiteren den Nachteil in sich, dass es nach dem Zünden durch die vorherrschende Restbewegung aus dem Einströmvorgang zu einer Anlagerung des Flammenkerns an die Innenwandung der Vorkammer 1 kommt, wodurch der Flammenkern gekühlt wird und sich nicht rasch genug vergrößern kann. Hierdurch kann eine Erhöhung der Kohlenwasserstoff-Abgasemission und eine schlechte, instabile Verbrennung eintreten.

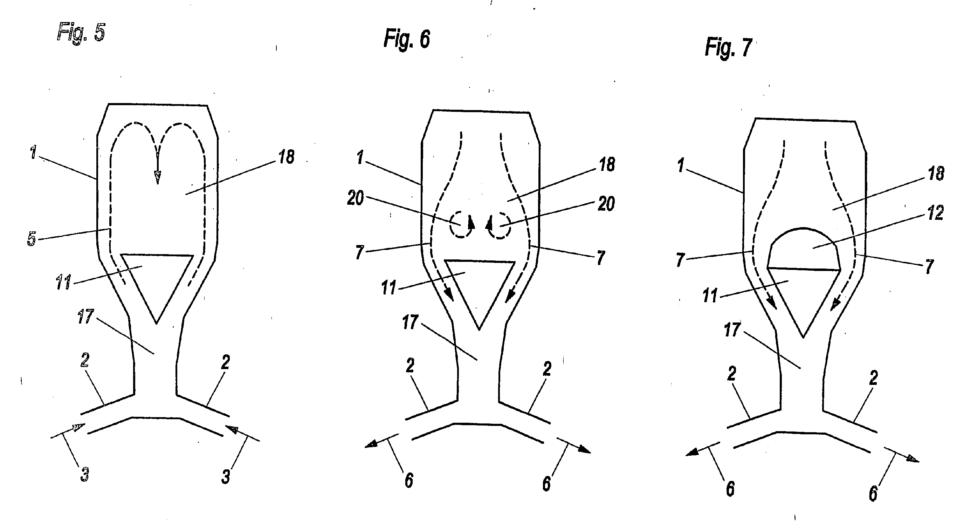

Die obigen Nachteile können durch das Einbringen einer Einrichtung zur Beeinflussung der Strömung des in die bzw. aus der Vorkammer strömenden Brennstoff-Luft-Gemisches in die Vorkammer, wie an Ausführungsbeispielen in den Fig. 5 bis 9 gezeigt, behoben werden. Diese Einrichtung zur Beeinflussung der Strömung leitet das einströmende Kraftstoff-Luftgemisch zumindest bereichsweise entlang der Innenwandung der Vorkammer. Die Einrichtung zur Beeinflussung der Strömung ist im Ausführungsbeispiel in Fig. 5 als Strömungskörper 11 ausgebildet. Der Strömungskörper 11 teilt das Innenvolumen der Vorkammer 1 in einen bei den Überströmöffnungen 2 liegenden Überströmbereich 17 und einen Zündbereich 18. Durch den Strömungskörper 11 wird das einströmende Kraftstoff-Luft-Gemisch wie von den Pfeilen 5 gezeigt, gleichmäßig an der Innenwandung der Vorkammer 1 entlang geführt und damit das Einströmverhalten gegenüber den Fig. 2 bis 4 umgekehrt. Dadurch ergibt sich eine gute Vermengung des einströmenden Frischgasgemisches mit dem Restgas in der Vorkammer und eine solide reproduzierbare Selbstzündung.

Besonders günstig ist es, dass das Vorkammervolumen zwischen 0,5 und 10% - vorzugsweise zwischen 1 und 7% - des Brennkammerverdichtungsendvolumens im Hauptbrennraum beträgt. Es sind darüber hinaus Ausführungsformen besonders günstig, bei denen das Vorkammervolumen 1,5% bis 5% oder 2% bis 4% des Brennkammerverdichtungsendvolumens aufweist.

Die Verdichtungsverhältnisse im Verbrennungsmotor liegen bevorzugt zwischen 8:1 und 15:1, besonders bevorzugt unter 12:1. Beim Ausströmen des im Normalbetrieb selbst entzündeten Kraftstoff-Luft-Gemisches aus der den kegelförmigen Strömungskörper 11 (die Kegelspitze weist zum Hauptbrennraum) aufweisenden Vorkammer 1 entlang der Strömungsbahn 7 kommt es vor der Grundfläche des kegelförmigen Strömungskörpers 11 zu einem Stau des austretenden, entzündeten Kraftstoff-Luft-Gemisches und zu den Wirbelbildungen 20. Um die Verwirbelungen 20.- vorzugsweise im Zündbereich 18 - in der Vorkammer 1 zu verhindern, sieht eine in Fig. 7 dargestellte besonders günstige Variante vor, dass eine runde Kuppe 12 auf der dem Zündbereich 18 zugewandten Seite der Einrichtung zur Beeinflussung der Strömung 11 angeordnet ist. Durch die runde Kuppe 12 in der Mitte der Vorkammer 1 wird die Ausströmung 7 während der Verbrennung somit begünstigt, da die in Fig. 6 dargestellten Sekundärwirbel 20 vermieden und damit der Ausströmwiderstand gesenkt wird. Das entzündete Kraftstoff-Luft-Gemisch tritt wie in Fig. 6 und Fig. 3 in Richtung 6 aus den Überströmöffnungen 2 aus der Vorkammer 1 in den Hauptbrennraum 8 aus und entzündet das dort komprimierte Kraftstoff-Luft-Gemisch.

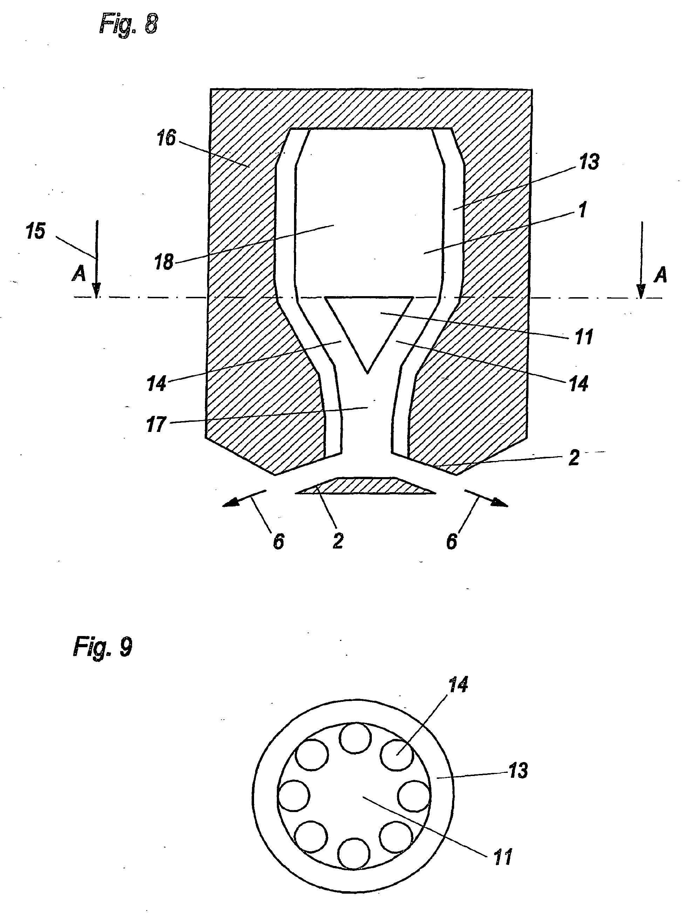

Fig. 8 zeigt eine andere Ausführungsform der Einrichtung 11 zur Beeinflussung der Strömung in der Vorkammer 1. Diese Einrichtung 11 zur Beeinflussung der Strömung weist in Fig. 8 kegelförmige Bohrungen 14 zwischen dem Überströmbereich 17 und dem Zündbereich 18 der Vorkammer 1 auf. Fig. 9 zeigt eine Draufsicht in Richtung 15 auf einen Horizontalschnitt entlang der Linie A-A in Fig. 8. Wie in Fig. 8 und Fig. 9 gezeigt, enden die Verbindungsbohrungen 14 im Bereich des Zündbereichs 18 der Vorkammer 1 an den Innenwandungen des Zündbereichs 18. Die Verbindungsbohrungen 14 können hierbei bei entsprechender Ausbildungsform der Zündkammer 1 auch zylindrisch ausgeführt sein, wobei auch nicht kreisförmige Querschnitte möglich sind (allgemeine Zylinder und allgemeine Kegel). Der Winkel der Bohrungen 14 zueinander ist variabel. Der maximale Winkel ist durch den Bohrungsdurchmesser und den Vorkammerdurchmesser gegeben, der minimale Winkel beträgt 15°, definiert als Öffnungswinkel eines Kreiskegels. Die Anzahl der vorzugsweise kegelig angeordneten Bohrungen 14 ist variabel, liegt in der Regel zwischen 1 und 50, beträgt vorzugsweise jedoch mindestens 2 und maximal 48, wobei mit zunehmender Bohrungsanzahl deren Durchmesser abnimmt. Andere Ausführungsformen sehen 2 bis 24 oder 2 bis 12 Verbindungsbohrungen 14 vor. Alternativ sind auch Zwischenformen der Einrichtung 11 Beeinflussung der Strömung zwischen den Verbindungsbohrungen 14 und dem Strömungskörper möglich. So kann der Übergang vom Überströmbereich 17 in den Zündbereich 18 auch mittels kegeligen Langbohrungen ausgeführt sein. Bei dieser Ausführungsvariante bleiben zwischen den kegeligen Langbohrungen nur noch vereinzelte Speichen als Träger der Einrichtung zur Strömungsbeeinflussungen übrig.

Eine weitere alternative Ausführungsform sieht vor, dass die Vorkammer 1 zumindest bereichsweise gegen das sie umgebende Material 16 des Motorblocks oder den Kühlwasserraum isoliert ist. Diese Isolierschicht 13 kann, wie in Fig. 8 und 9 dargestellt, zum Beispiel durch einen einfachen Luftspalt gebildet werden. Die Wärmeisolierung der Wandung der Vorkammer 1 hebt die Wandtemperatur an und verringert dadurch weiter das Abkühlen des Flammenkerns.

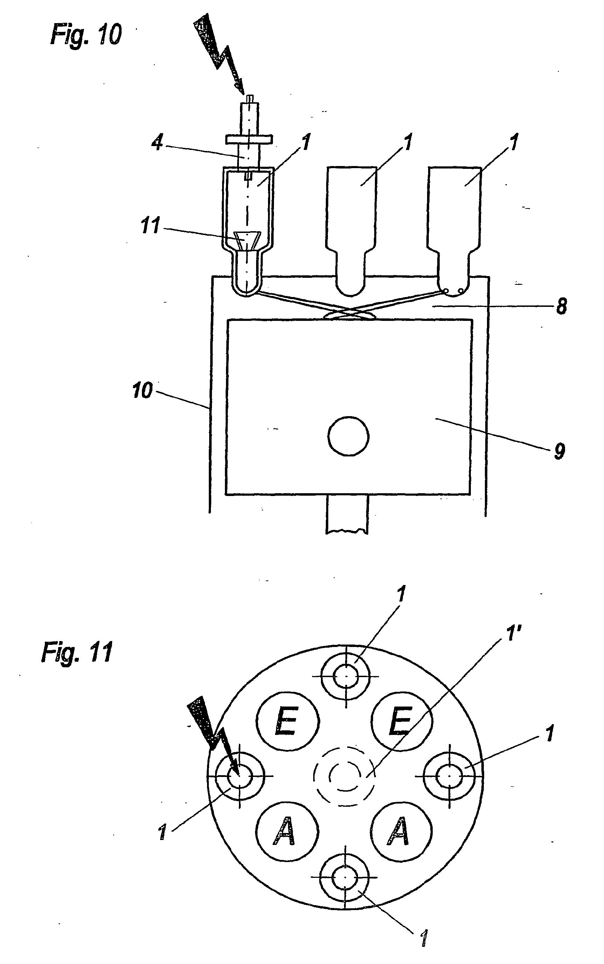

Die Fig. 10 und 11 zeigen ein Ausführungsbeispiel bei dem der (Haupt-) Hauptbrennraum 8 vier Vorkammern 1 aufweist, die zwischen den Einlaßventilen E und den Auslaßventilen A angeordnet sind. Strichliert eingezeichnet ist noch eine fünfte Vorkammer in der Mitte (nur in Fig. 11), die mit dem Bezugszeichen 1 gekennzeichnet ist. In der in Fig. 10 und 11 gezeigten linken Vorkammer 1 kann eine Zündkerze 4 versehen sein, die jedoch im Normalbetrieb abschaltbar ist. Jedenfalls reicht es aus, wenn nur eine von mehreren Vorkammern eine solche Zündkerze 4 zum Hochfahren des Motors aufweist.

Die Vorkammern 1 können identisch ausgebildet sein (bis auf die Zündkerze 4). Es ist aber auch möglich, dass diese Vorkammern unterschiedliche Gestalt aufweisen, um eine Optimierung des Motorlaufs zu erzielen.

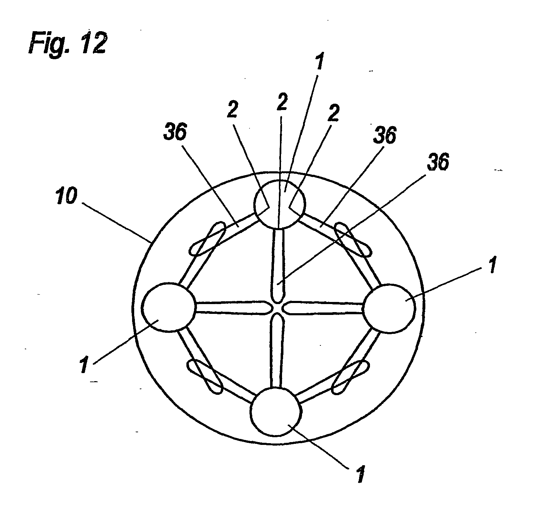

Die Fig. 12 zeigt in einer schematischen Draufsicht die vier Brennkammern, wobei die Lage und Ausrichtung der Überströmöffnungen 2 durch schematische Keulen 36 angedeutet ist, die das aus den Vorkammern ausströmende entzündete Gas-Luft-Gemisch symbolisieren. Man sieht, dass diese Überströmöffnungen in Umfangsrichtung und zur Zylindermitte hin ausgerichtet sind, um das im Hauptbrennraum befindliche komprimierte Kraftstoff-Luft-Gemisch zuverlässig zu zünden.

Selbstverständlich ist die Erfindung nicht auf die dargestellten Ausführungsbeispiele beschränkt. Beispielsweise kann die Anzahl und Lage der Vorkammern variieren, ebenso die Art des verwendeten Kraftstoffs.

## Patentansprüche

1. Verbrennungsmotor, insbesondere stationärer Gas-Ottomotor, mit mindestens einem Zylinder in dem ein Kolben verschieblich gelagert ist, wobei der Kolben ein im Wesentlichen homogenes Kraftstoff-Luftgemisch in einem Hauptbrennraum im Zylinder komprimiert und der Hauptbrennraum über wenigstens eine Überströmöffnung mit mindestens einer Vorkammer in Verbindung steht, **dadurch gekennzeichnet, dass** das homogene Kraftstoff-Luftgemisch beim Komprimieren durch die Überströmöffnung in die Vorkammer (1) strömt, dort in mindestens einem Betriebszustand des Verbrennungsmotors (M), vorzugsweise bei hochgefahrenem Verbrennungsmotor (M), von selbst zündet und anschließend das brennende Kraftstoff-Luftgemisch durch die Überströmöffnung (2) in den Hauptbrennraum (8) strömt, um das dort komprimierte Kraftstoff-Luftgemisch zu entzünden.

2. Verbrennungsmotor nach Anspruch 1, **dadurch gekennzeichnet, dass** die Entzündung des im Hauptbrennraum (8) komprimierten Kraftstoff-Luftgemisches ausschließlich durch das aus der Vorkammer (1) überströmende brennende Kraftstoff-Luftgemisch erfolgt.

3. Verbrennungsmotor nach einem der Ansprüche 1 oder 2, **dadurch gekennzeichnet, dass** der Verbrennungsmotor (M) ein Magermotor mit einem Luftverhältnis λ größer 1,4, vorzugsweise größer 1,6, ist.

4. Verbrennungsmotor nach einem der Ansprüche 1 bis 3, **dadurch gekennzeichnet, dass** das Volumen in der Vorkammer (1) zwischen 0,5% und 10%, vorzugsweise zwischen 1 % und 7%, des Hauptbrennkammerverdichtungsendvolumens im Hauptbrennraum (8) beträgt.

5. Verbrennungsmotor nach einem der Ansprüche 1 bis 4, **dadurch gekennzeichnet, dass** das Volumen in der Vorkammer 1,5% bis 5% - vorzugsweise 2% bis 4 % - des Hauptbrennkammerverdichtungsendvolumens im Hauptbrennraum (8) beträgt.

6. Verbrennungsmotor nach einem der Ansprüche 1 bis 5, **dadurch gekennzeichnet, dass** bei einer längserstreckten Vorkammer (1) der größte Kammerquerschnitt senkrecht zur Längserstreckung der Vorkammer (1) und bei einer nicht längserstreckten Vorkammer (1) der größte Kammerquerschnitt eine Querschnittsfläche aufweist, welche zwischen 0,5% und 10%, vorzugsweise zwischen 2% und 5%, der Querschnittsfläche des Zylinders senkrecht zur Zylinderlängserstreckung beträgt.

7. Verbrennungsmotor nach einem der Ansprüche 1 bis 6, **dadurch gekennzeichnet, dass** der kleinste Querschnitt der Überströmöffnung (2) eine Fläche zwischen 3% und 20%, vorzugsweise zwischen 5% und 8%, der Querschnittsfläche der Vorkammer (1) aufweist, wobei diese bei einer längserstreckten Vorkammer (1) der größte Kammerquerschnitt senkrecht zur Längserstreckung der Vorkammer (1) und bei einer nicht längserstreckten Vorkammer (1) der größte Kammerquerschnitt ist.

8. Verbrennungsmotor nach einem der Ansprüche 1 bis 7, **dadurch gekennzeichnet, dass** er ein mehrzylindriger Hubkolbenmotor (M) ist.

9. Verbrennungsmotor nach einem der Ansprüche 1 bis 8, **dadurch gekennzeichnet, dass** jedem Hauptbrennraum (8) zwei oder mehrere Vorkammern (1) zugeordnet sind, die jeweils über wenigstens eine Überströmöffnung (2) mit dem Hauptbrennraum (8) in Verbindung stehen.

10. Verbrennungsmotor nach einem der Ansprüche 1 bis 9, **dadurch gekennzeichnet, dass** dem Zylinder mindestens eine in der Vorkammer (1) angeordnete, abschaltbare Zündkerze (4) zugeordnet ist.

11. Verbrennungsmotor nach Anspruch 10, **dadurch gekennzeichnet, dass** im Fall von mehreren Vorkammern nur eine der Vorkammern (1) eine Zündkerze (4) aufweist.

12. Verbrennungsmotor nach einem der Ansprüche 10 oder 11, **dadurch gekennzeichnet, dass** eine Einrichtung (29) zum Erfassen von mindestens einem Motorparameter (N, P_{z}, T) sowie eine Zündeinrichtung (35) vorgesehen ist, wobei die Zündeinrichtung (35) die Zündkerze(n) (4) in Abhängigkeit von dem oder den erfassten Motorparameter(n) vorzugsweise zylinderselektiv an- bzw. abschaltet.

13. Verbrennungsmotor nach Anspruch 12, **dadurch gekennzeichnet, dass** der erfasste Motorparameter die Motorleistung (N), die vorzugsweise zylinderselektiv gemessene Abgastemperatur (T) und/oder der vorzugsweise zylinderselektiv gemessene Druck (P_{z}) im Hauptbrennraum (8) ist.

14. Verbrennungsmotor nach einem der Ansprüche 1 bis 13, **dadurch gekennzeichnet, dass** die Vorkammer(n) (1) keine Kraftstoffzufuhr aufweist (aufweisen).

15. Verbrennungsmotor nach einem der Ansprüche 1 bis 14, **dadurch gekennzeichnet, dass** die Vorkammer(n) (1) auf der dem Kolben (9) abgewandten Seite des Hauptbrennraumes (8) am Zylinder angeordnet ist (sind).

16. Verbrennungsmotor nach einem der Ansprüche 1 bis 15, **dadurch gekennzeichnet, dass** jede Vorkammer (1) einen länglichen Innenhohlraum aufweist, der vorzugsweise achsparallel zur Zylinderachse ausgerichtet ist.

17. Verbrennungsmotor nach einem der Ansprüche 1 bis 16, **dadurch gekennzeichnet, dass** er pro Zylinder mindestens ein Einlass- und mindestens ein Auslassventil (E, A) aufweist und die Vorkammern (1) im Bereich zwischen diesen Ventilen im Zylinderkopf angeordnet sind.

18. Verbrennungsmotor nach einem der Ansprüche 1 bis 17, **dadurch gekennzeichnet, dass** zumindest eine Einrichtung (11) zur Beeinflussung der Strömung des in die bzw. aus der Vorkammer (1) strömenden Brennstoff-Luft-Gemisches vorgesehen ist, wobei diese Einrichtung (11) das in die Vorkammer (1) einströmende Kraftstoff-Luftgemisch zumindest bereichsweise entlang der Innenwandung der Vorkammer (1) führt.

19. Verbrennungsmotor nach Anspruch 18, **dadurch gekennzeichnet, dass** mindestens eine Einrichtung (11) zur Beeinflussung der Strömung die Vorkammer (1) in mindestens einen vorzugsweise hohlraumartigen Zündbereich (18) und einen bei mindestens einer Überströmöffnung liegenden Überströmbereich (17) unterteilt.

20. Verbrennungsmotor nach Anspruch 19, **dadurch gekennzeichnet, dass** die Einrichtung (11) zur Beeinflussung der Strömung mindestens eine kegelförmig und/oder zylindrisch angeordnete Verbindungsbohrung (14) zwischen dem Überströmbereich (17) und dem Zündbereich (14) der Vorkammer (1) aufweist, wobei diese Verbindungsbohrung(en) (14) im Zündbereich (18) an der Innenwandung der Vorkammer (1) mündet (münden).

21. Verbrennungsmotor nach Anspruch 20, **dadurch gekennzeichnet, dass** die Einrichtung zur Beeinflussung (11) der Strömung 1 bis 50 Verbindungsbohrungen (14) - vorzugsweise 2 bis 24 Verbindungsbohrungen (14) - aufweist.

22. Verbrennungsmotor nach einem der Ansprüche 18 oder 19, **dadurch gekennzeichnet, dass** die Einrichtung (11) zur Beeinflussung der Strömung ein Strömungskörper ist.

23. Verbrennungsmotor nach einem der Ansprüche 18 bis 22, **dadurch gekennzeichnet, dass** die Einrichtung (11) zur Beeinflussung der Strömung eine zum Hauptbrennraum (8) weisende Kegelspitze aufweist.

24. Verbrennungsmotor nach einem der Ansprüche 19 bis 23, **dadurch gekennzeichnet, dass** die Einrichtung (11) zur Beeinflussung der Strömung eine zum Zündbereich (18) weisende im wesentlichen abgerundete Kuppe (12), vorzugsweise zur Vermeidung von Verwirbelungen (20), aufweist.

25. Verbrennungsmotor nach einem der Ansprüche 1 bis 24, **dadurch gekennzeichnet, dass** die Innenwandung der Vorkammer(n) (1) zumindest bereichsweise von einer Wärmeisolierung (13) - vorzugsweise in Form eines Luftspaltes - umgeben ist.

26. Verbrennungsmotor nach einem der Ansprüche 1 bis 25, **dadurch gekennzeichnet, dass** das Verdichtungsverhältnis zwischen 8:1 und 15:1, vorzugsweise unter 12:1 liegt.

## Claims

1. An internal combustion engine, in particular a stationary Otto gas engine, having at least one cylinder in which a piston is displaceably mounted, wherein the piston compresses a substantially homogeneous fuel-air mixture in a main combustion space in the cylinder, and the main combustion space communicates via at least one overflow opening with at least one prechamber, **characterised in that** upon compression the homogeneous fuel-air mixture flows through the overflow opening into the prechamber (1), where, in at least one operational state of the internal combustion engine (M), preferably in the accelerated state of the internal combustion engine (M), it self-ignites, whereupon the combusting fuel-air mixture flows through the overflow opening (2) into the main combustion space (8) in order to ignite the compressed fuel-air mixture there.

2. An internal combustion engine according to Claim 1, **characterised in that** the igniting of the fuel-air mixture which has been compressed in the main combustion space (8) takes place exclusively by the combusting fuel-air mixture which overflows from out of the prechamber (1),

3. An internal combustion engine according to one of Claims 1 or 2, **characterised in that** the internal combustion engine (M) is a lean-mix engine having an air ratio λ which is greater than 1.4, preferably greater than 1.6.

4. An internal combustion engine according to one of Claims 1 to 3, **characterised in that** the volume in the prechamber (1) is between 0.5% and 10%, preferably between 1% and 7%, of the end compression volume within the main combustion chamber in the main combustion space (8).

5. An internal combustion engine according to one of Claims 1 to 4, **characterised in that** the volume in the prechamber is 1.5% to 5% - preferably 2% to 4% - of the end compression volume within the main combustion chamber in the main combustion space (8).

6. An internal combustion engine according to one of Claims 1 to 5, **characterised in that** in the case of a longitudinally extending prechamber (1) the maximum chamber cross-section perpendicular to the longitudinal extent of the prechamber (1), and, in the case of a non-longitudinally extending prechamber (1) the maximum chamber cross-section has a cross-sectional surface area which amounts to between 0.5% and 10%, preferably between 2% and 5%, of the cross-sectional surface area of the cylinder perpendicularly to the longitudinal extent of the cylinder,

7. An internal combustion engine according to one of Claims 1 to 6, **characterised in that** the minimum cross-section of the overflow opening (2) has a surface area of between 3% and 20%, preferably of between 5% and 8%, of the cross-sectional surface area of the prechamber (1), wherein, in the case of a longitudinally extending prechamber (1) said surface area is the maximum chamber cross-section perpendicularly to the longitudinal extent of the prechamber (1), and, in the case of a non-longitudinally extending prechamber (1) is the maximum chamber cross-section.

8. An internal combustion engine according to one of Claims 1 to 7, **characterised in that** it is a multi-cylinder piston engine (M).

9. An internal combustion engine according to one of Claims 1 to 8, **characterised in that** associated with each main combustion space (8) are two or more prechambers (1), each one of which communicates with the main combustion space (8) via at least one overflow opening (2).

10. An internal combustion engine according to one of Claims 1 to 9, **characterised in that** associated with the cylinder is at least one spark plug (4) which is arranged in the prechamber (1) and which can be switched off.

11. An internal combustion engine according to Claim 10, **characterised in that** in the case of a plurality of prechambers only one of the prechambers (1) has a spark plug (4).

12. An internal combustion engine according to one of Claims 10 or 11, **characterised in that** there is provided a device (29) for recording at least one engine parameter (N, P_{z}, T) and also an ignition device (35), wherein the ignition device (35) switches the spark plug(s) (4) on or off, preferably in cylinder-selective manner, in dependency on the engine parameter(s) recorded.

13. An internal combustion engine according to Claim 12, **characterised in that** the engine parameter recorded is the engine power (N), the exhaust gas temperature (T) which is preferably measured in cylinder-selective manner, and/or the pressure (P_{z}) in the main combustion space (8) which is preferably measured in cylinder-selective manner.

14. An internal combustion engine according to one of Claims 1 to 13, **characterised in that** the prechamber(s) has/have no fuel supply.

15. An internal combustion engine according to one of Claims 1 to 14, **characterised in that** the prechamber(s) is/are arranged on the cylinder, on the side of the main combustion space (8) which faces away from the piston (9).

16. An internal combustion engine according to one of Claims 1 to 15, **characterised in that** each prechamber (1) has an elongate internal cavity which is preferably oriented so that it is axially parallel with the axis of the cylinder.

17. An internal combustion engine according to one of Claims 1 to 16, **characterised in that** for each cylinder it has at least one intake valve and at least one discharge valve (E, A), and the prechambers (1) are arranged in the cylinder head, in the region between these valves.

18. An internal combustion engine according to one of Claims 1 to 17, **characterised in that** at least one device (11) is provided for the purpose of influencing the flow of the fuel-air mixture which is flowing into or out of the prechamber (1), wherein said device (11) guides the fuel-air mixture flowing into the prechamber (1) at least regionally along the inner wall of the prechamber (1).

19. An internal combustion engine according to Claim 18, **characterised in that** at least one device (11) for influencing the flow subdivides the prechamber (1) into at least one preferably cavity-like ignition region (18) and into an overflow region (17) which is disposed by at least one overflow opening.

20. An internal combustion engine according to Claim 19, **characterised in that** the device (11) for influencing the flow has at least one conically and/or cylindrically arranged connecting bore (14) between the overflow region (17) and the ignition region (14) of the prechamber (1), wherein said connecting bore(s) (14) opens/open in the ignition region (18) onto the inner wall of the prechamber (1).

21. An internal combustion engine according to Claim 20, **characterised in that** the device for influencing (11) the flow has 1 to 50 connecting bores (14) - preferably 2 to 24 connecting bores (14).

22. An internal combustion engine according to one of Claims 18 or 19, **characterised in that** the device (11) for influencing the flow is a flow body.

23. An internal combustion engine according to one of Claims 18 to 22, **characterised in that** the device (11) for influencing the flow has a cone point which points towards the main combustion space (8).

24. An internal combustion engine according to one of Claims 19 to 23, **characterised in that** the device (11) for influencing the flow has a substantially rounded end (12) which points towards the ignition region (18), preferably in order to prevent turbulence (20).

25. An internal combustion engine according to one of Claims 1 to 24, **characterised in that** the inner wall of the prechamber(s) (1) is surrounded at least regionally by heat insulation (13) - preferably in the form of an air gap.

26. An internal combustion chamber according to one of Claims 1 to 25, **characterised in that** the compression ratio is between 8-1 and 15:1, preferably below 12:1.

## Revendications

1. Moteur à combustion interne, en particulier moteur stationnaire à allumage à gaz, avec au moins un cylindre où est logé un piston coulissant, ledit piston comprimant un mélange air-carburant sensiblement homogène dans une chambre de combustion principale du cylindre, et ladite chambre de combustion principale étant relié à au moins une chambre de précombustion par au moins un orifice de décharge, **caractérisé en ce que** le mélange air-carburant homogène s'écoule par l'orifice de décharge dans la chambre de précombustion (1) lors de la compression, s'y allume spontanément dans au moins un état de fonctionnement du moteur à combustion interne (M), de préférence à l'accélération du moteur à combustion interne (M), et **en ce que** le mélange air-carburant en combustion s'écoule ensuite par l'orifice de décharge (2) dans la chambre de combustion principale (8) pour allumer le mélange air-carburant qui y est comprimé.

2. Moteur à combustion interne selon la revendication 1, **caractérisé en ce que** l'allumage du mélange air-carburant comprimé dans la chambre de combustion principale (8) est exclusivement réalisé par le mélange air-carburant en combustion sortant de la chambre de précombustion (1).

3. Moteur à combustion interne selon l'une des revendications 1 ou 2, **caractérisé en ce que** le moteur à combustion interne (M) est un moteur à mélange pauvre avec un rapport air/carburant λ supérieur à 1,4, de préférence supérieur à 1,6.

4. Moteur à combustion interne selon l'une des revendications 1 à 3, **caractérisé en ce que** le volume dans la chambre de précombustion (1) est compris entre 0,5 % et 10 %, de préférence entre 1 % et 7 %, du volume de compression final de la chambre de combustion principale (8).

5. Moteur à combustion interne selon l'une des revendications 1 à 4, **caractérisé en ce que** le volume dans la chambre de précombustion est compris entre 1,5 % et 5 %, de préférence entre 2 % et 4 %, du volume de compression final de la chambre de combustion principale (8).

6. Moteur à combustion interne selon l'une des revendications 1 à 5, **caractérisé en ce que** pour une chambre de précombustion (1) s'étendant en longueur, la section maximale de la chambre perpendiculairement à l'extension longitudinale de la chambre de précombustion (1), et pour une chambre de précombustion (1) ne s'étendant pas en longueur, la section maximale de la chambre, présentent une surface de section comprise entre 0,5 % et 10 %, de préférence entre 2 % et 5 %, de la surface de section du cylindre perpendiculairement à l'extension longitudinale du cylindre.

7. Moteur à combustion interne selon l'une des revendications 1 à 6, **caractérisé en ce que** la section minimale de l'orifice de décharge (2) présente une surface comprise entre 3 % et 20 %, de préférence entre 5 % et 8 %, de la surface de section de la chambre de précombustion (1), celle-ci étant, pour une chambre de précombustion (1) s'étendant en longueur, la section de chambre maximale perpendiculairement à l'extension longitudinale de la chambre de précombustion (1), et la section de chambre maximale pour une chambre de précombustion (1) ne s'étendant pas en longueur.

8. Moteur à combustion interne selon l'une des revendications 1 à 7, **caractérisé en ce que** celui-ci est un moteur à plusieurs cylindres à pistons alternatifs (M).

9. Moteur à combustion interne selon l'une des revendications 1 à 8, **caractérisé en ce que** deux chambres de précombustion (1) ou plus sont affectées à chaque chambre de combustion principale (8), lesquelles sont reliées chacune à la chambre de combustion principale (8) par au moins un orifice de décharge (2).

10. Moteur à combustion interne selon l'une des revendications 1 à 9, **caractérisé en ce qu'**au moins une bougie d'allumage (4) désactivable disposée dans la chambre de précombustion (1) est affectée au cylindre.

11. Moteur à combustion interne selon la revendication 10, **caractérisé en ce qu'**une seule des chambres de précombustion (1) comporte une bougie d'allumage (4) dans le cas de plusieurs chambres de précombustion.

12. Moteur à combustion interne selon l'une des revendications 10 ou 11, **caractérisé en ce qu'**il est prévu un dispositif (29) pour la saisie d'au moins un paramètre de moteur (N, P_{z}, T) ainsi qu'un dispositif d'allumage (35), ledit dispositif d'allumage (35) activant ou désactivant la ou les bougies d'allumage (4) en fonction du ou des paramètres de moteur saisis, de préférence avec une sélection de cylindre.

13. Moteur à combustion interne selon la revendication 12, **caractérisé en ce que** le paramètre de moteur saisi est la puissance du moteur (N), la température de gaz d'échappement (T) mesurée de préférence avec une sélection de cylindre, et/ou la pression (P_{z}) dans la chambre de combustion principale (8) mesurée de préférence avec une sélection de cylindre.

14. Moteur à combustion interne selon l'une des revendications 1 à 13, **caractérisé en ce que** la ou les chambres de précombustion (1) ne comportent aucune amenée de carburant.

15. Moteur à combustion interne selon l'une des revendications 1 à 14, **caractérisé en ce que** la ou les chambres de précombustion (1) sont disposées sur le cylindre du côté de la chambre de combustion principale (8) opposé au piston (9).

16. Moteur à combustion interne selon l'une des revendications 1 à 15, **caractérisé en ce que** chaque chambre de précombustion (1) comporte une cavité intérieure oblongue, laquelle est de préférence orientée parallèlement à l'axe du cylindre.

17. Moteur à combustion interne selon l'une des revendications 1 à 1, **caractérisé en ce que** celui-ci comporte au moins une soupape d'admission et au moins une soupape d'échappement (E, A) par cylindre, et **en ce que** les chambres de précombustion (1) sont disposées dans la zone comprise entre ces soupapes dans la culasse du cylindre.

18. Moteur à combustion interne selon l'une des revendications 1 à 17, **caractérisé en ce qu'**il est prévu au moins un dispositif (11) pour influencer l'écoulement du mélange air-carburant s'écoulant dans ou hors de la chambre de précombustion (1), ledit dispositif (11) guidant le mélange air-carburant s'écoulant dans la chambre de précombustion (1) au moins partiellement le long de la paroi intérieure de la chambre de précombustion (1).

19. Moteur à combustion interne selon la revendication 18, **caractérisé en ce qu'**au moins un dispositif (11) pour influencer l'écoulement divise la chambre de précombustion (1) en au moins une zone d'allumage (18) de préférence en forme de cavité et en une zone de décharge (17) située prés d'au moins un orifice de décharge.

20. Moteur à combustion interne selon la revendication 19, **caractérisé en ce que** le dispositif (11) pour influencer l'écoulement comporte au moins un alésage de liaison (14) prévu en forme de cône et/ou de cylindre entre la zone de décharge (17) et la zone d'allumage (14) de la chambre de précombustion (1), ce ou ces alésages de liaison (14) débouchant dans la zone d'allumage (18) sur la paroi intérieure de la chambre de précombustion (1).

21. Moteur à combustion interne selon la revendication 20, **caractérisé en ce que** le dispositif (11) pour influencer l'écoulement comprend entre 1 et 50 alésages de liaison (14), de préférence entre 2 et 24 alésages de liaison (14).

22. Moteur à combustion interne selon l'une des revendications 18 ou 19, **caractérisé en ce que** le dispositif (11) pour influencer l'écoulement est un corps d'écoulement.

23. Moteur à combustion interne selon l'une des revendications 18 à 22, **caractérisé en ce que** le dispositif (11) pour influencer l'écoulement comporte une pointe conique dirigée vers la chambre de combustion principale (8).

24. Moteur à combustion interne selon l'une des revendications 19 à 23, **caractérisé en ce que** le dispositif (11) pour influencer l'écoulement comporte une calotte (12) sensiblement arrondie dirigée vers la zone d'allumage (18), de préférence pour éviter des turbulences (20).

25. Moteur à combustion interne selon l'une des revendications 1 à 24, **caractérisé en ce que** la paroi intérieure de la ou des chambres de précombustion (1) est entourée au moins partiellement par une isolation thermique (13) - de préférence sous la forme d'une fente d'air.

26. Moteur à combustion interne selon l'une des revendications 1 à 25, **caractérisé en ce que** le taux de compression est compris entre 8:1 et 15:1, et est de préférence inférieur à 12:1.
